# FASCICULE DE BREVET EUROPEEN

(11) **EP 3 971 523 B1**
(45) Date de publication et mention de la délivrance du brevet: **05.08.2026**
(21) Numéro de dépôt: 21191937.8
(22) Date de dépôt: 18.08.2021
(51) Int. Cl.: G01C 19/5747, B81B 3/00

(54) **DISPOSITIF DE COUPLAGE DESTINÉ À COUPLER DEUX ÉLÉMENTS EN MOUVEMENT**
KOPPLUNGSVORRICHTUNG ZUM VERBINDEN VON ZWEI ELEMENTEN IN BEWEGUNG
COUPLING DEVICE INTENDED FOR COUPLING TWO MOVING ELEMENTS

(30) Priorité: 27.08.2020 FR 2008733
(43) Date de publication de la demande: 23.03.2022
(73) Titulaire: Commissariat à l'Energie Atomique et aux Energies Alternatives, 75015 Paris (FR)
(72) Inventeur: JOET, Loïc, 38054 Grenoble Cedex 09 (FR); REY, Patrice, 38054 Grenoble Cedex 09 (FR)
(74) Mandataire: Santarelli

(56) Documents cités:
- US-A1- 2016 370 182
- US-A1- 2018 172 446

## Description

### DOMAINE TECHNIQUE ET ÉTAT DE LA TECHNIQUE ANTÉRIEURE

La présente invention se rapporte à un dispositif de couplage destiné à coupler deux éléments en mouvement et à un gyromètre mettant en œuvre au moins un tel dispositif de couplage.

Les gyromètres microélectromécaniques ou gyromètres MEMS (Microelectromechanical Systems en terminologie anglo-saxonne) comportent un support, deux masses mobiles suspendues au support chacune par un cadre de découplage, des moyens d'excitation des masses généralement dans le plan et des moyens de détection du déplacement des masses.

Par exemple, lorsque l'on souhaite détecter la vitesse de rotation selon la direction Z hors-plan, chaque masse avec son cadre de découplage sont excités dans la direction X, et le mouvement des masses dans la direction Y est mesuré.

Les cadres de découplage et les masses ont en excitation deux modes de résonance distincts, un mode de résonance dans lequel les deux masses et les deux cadres de découplage ont un mouvement en phase, i.e. ils se déplacent dans le même sens, et un mode de résonance dans lequel les masses et cadres de découplage ont un mouvement en opposition de phase ou en antiphase, i.e. elles se déplacent dans des sens opposés. Le mouvement en antiphase des masses permet de réaliser des mesures différentielles séparant le signal utile, de l'effet d'une éventuelle accélération ou gravité.

Le mode de résonance en antiphase est le mode utile et le mode de résonance en phase est le mode inutile pour le gyromètre.

Or le mode inutile a une fréquence de résonance plus basse que celle du mode utile. Il est souhaitable que le mode de résonance utile soit excité à une fréquence plus basse que celle du mode inutile.

De manière plus générale il est souhaitable d'offrir un dispositif de couplage entre deux éléments en mouvement, favorisant un déplacement symétrique des éléments l'un par rapport à l'autre.

Les documents US 2018/172446 A1 et US 2016/370182 A1 décrivent chacun un exemple de dispositif de couplage mécanique de masses mobiles pour gyromètre à structure microélectromécanique selon un plan, pour imposer auxdites masses des déplacements en translation symétriques dans ledit plan.

### EXPOSÉ DE L'INVENTION

C'est par conséquent un but de la présente invention d'offrir un dispositif de couplage destiné à coupler deux éléments en mouvement, les éléments pouvant être mobiles en translation et/ou en rotation.

C'est également un but de la présente invention d'offrir un gyromètre présentant un mode d'excitation en antiphase à une fréquence plus basse que celle du mode d'excitation en phase.

Le but énoncé ci-dessus est atteint par un dispositif de couplage comportant un plan de symétrie normal au plan du dispositif de couplage, et comportant deux leviers articulés en rotation sur un support autour d'une direction hors-plan, chaque levier comportant une première extrémité destinée à être reliée respectivement à l'un des deux éléments mobiles l'un par rapport à l'autre, et une deuxième extrémité par laquelle le levier est articulé en rotation, un élément de couplage relié aux deux leviers et configuré pour se déplacer en translation dans une direction du plan, ledit élément de couplage étant relié au support par un ou plusieurs plots d'ancrage et des ressorts assurant un déplacement en translation selon ladite direction du plan tout en empêchant la rotation autour la direction hors-plan. Les deux éléments mobiles reliés par le dispositif de couplage ont alors des mouvements symétriques par rapport au plan de symétrie.

On impose aux leviers de pivoter symétriquement l'un par rapport à l'autre, ce mouvement étant autorisé par le déplacement en translation de l'élément de couplage, et on les empêche d'avoir des mouvements non symétriques l'un par rapport à l'autre, ces mouvements étant empêchés par le fait que le mouvement en rotation de l'élément de couplage est fortement limité.

Deux dispositifs de couplage sont avantageusement mis en œuvre dans un gyromètre et relient les cadres de découplage. Le mode en phase est repoussé à des fréquences plus élevées, le gyromètre présente alors une fréquence de son mode d'excitation en antiphase ou mode utile, plus basse que celle de son mode d'excitation en phase ou mode inutile. Les moyens d'excitation en excitant les cadres de découplage à la fréquence du mode en antiphase excitent moins le mode inutile. Le fonctionnement du gyromètre est lors amélioré.

De manière très avantageuse, le gyromètre comporte des moyens de détection du déplacement des cadres de découplage mettant en œuvre au moins une jauge de contrainte. De manière préférée des moyens de démultiplication sont prévus entre au moins un dispositif de couplage et la jauge de contrainte. En effet le déplacement des cadres de découplage est de l'ordre de mille fois celui que peut supporter une jauge de contrainte.

Les moyens de démultiplication comportent par exemple en série des bras de leviers, qui combinés au dispositif de découplage qui présente déjà une démultiplication du déplacement, permettent d'obtenir un déplacement adapté à la jauge de contrainte.

La présente demande a alors pour objet un dispositif de couplage mécanique selon la revendication 1, destiné à coupler deux éléments mobiles en mouvement dans un premier plan, de sorte à leur imposer des déplacements symétriques par rapport à un deuxième plan normal au premier plan. Ledit dispositif de couplage comporte, entre autres, deux bras articulés en rotation chacun sur un support par une liaison pivot autour d'une première direction nors-plan normale au premier plan, chaque bras étant destiné à être relié à un des éléments mobiles par des premiers éléments présentant une forte rigidité dans une deuxième direction du premier plan, un élément de couplage auquel sont reliés les deux bras par des deuxièmes éléments présentant une forte rigidité dans une troisième direction du premier plan, ledit élément de couplage étant configuré pour se déplacer en translation le long de la troisième direction, des moyens de suspension dudit élément de couplage configurés pour guider l'élément de couplage en translation le long de la troisième direction et limiter son déplacement en rotation autour de la première direction.

Selon l'invention, les premiers éléments comportent des lames rigides en compression dans la deuxième direction et souples en flexion dans la troisième direction, et les deuxièmes éléments comportent des lames rigides en compression dans la troisième direction et souples en flexion dans la deuxième direction et la liaison pivot comporte un plot d'ancrage au support et deux lames reliées entre le plot d'ancrage et le bras.

Dans un exemple, l'élément de couplage comporte deux bords latéraux de part et d'autre de la troisième direction, et les moyens de suspension comportent quatre moyens, deux moyens de part et d'autre de l'élément de couplage par rapport à la troisième direction, chaque moyen étant disposé à un extrémité d'un bord latéral.

Chaque moyen peut comporter une première poutre et une deuxième poutre parallèles, chaque première et deuxième poutre étant apte à se déformer en flexion dans la troisième direction et étant rigide en compression dans la deuxième direction, et la première poutre comporte une première extrémité longitudinale fixée à l'élément de couplage et une deuxième extrémité longitudinale fixée à un élément de liaison s'étendant dans la troisième direction, la deuxième poutre comporte une première extrémité longitudinale fixée à un plot d'ancrage et une deuxième extrémité longitudinale fixée à un élément de liaison, et l'élément de liaison est commun aux deux moyens reliés au même bord latéral de l'élément de couplage.

De préférence, les bras sont peu ou pas déformables en flexion dans la deuxième direction.

La présente demande a également pour objet un gyromètre comportant un support, deux cadres de découplage suspendus au support de sorte à être mobile en translation dans la deuxième direction, une masse suspendue à chaque cadre de découplage, de sorte à être mobile en translation dans la troisième direction, au moins un dispositif de couplage selon la présente demande, reliant mécaniquement les deux cadres de découplage de sorte à leur imposer un déplacement en opposition de phase dans la deuxième direction, des moyens d'excitation des cadres de découplage dans la deuxième direction et des moyens de détection du déplacement des masses dans la troisième direction.

De préférence, le gyromètre comporte deux dispositif de couplage et chaque cadre de découplage a la forme générale d'un U, les deux cadres de découplage étant disposés de sorte que les extrémités libres des branches du U soient alignées, et chaque dispositif de couplage relie deux extrémités libres alignées des deux cadres de découplage.

Chaque bras d'un des dispositifs de couplage peut être relié à une extrémité libre d'un des cadres de découplage par une poutre s'étendant dans la deuxième direction.

Selon une caractéristique additionnelle, le gyromètre comporte des moyens de détection du déplacement des cadres de découplage dans la deuxième direction, et lesdits moyens de détection comportent au moins une jauge de contrainte sensible au déplacement d'un des éléments mobiles.

De manière avantageuse, le gyromètre comporte des moyens de démultiplication du déplacement de l'élément mobile.

Par exemple, les moyens de démultiplication comportent au moins un bras de levier en série avec les bras d'au moins un dispositif de découplage.

Le bras de levier peut comporter deux bras articulés en rotation sur le support et comporter une extrémité reliée à l'élément de couplage, lesdits bras s'étendant dans la deuxième direction et étant situés à l'opposé des bras du dispositif de couplage par rapport à l'élément de couplage.

Avantageusement, le gyromètre comporte un moins un autre bras de levier comportant deux bras articulés en rotation sur le support, chacun relié par une extrémité à un bras du bras de levier et relié par une autre extrémité à la jauge de contrainte.

De préférence, les moyens de détection du déplacement des masses comportent au moins une jauge de contrainte et ladite jauge de contrainte et la au moins une jauge de contrainte des moyens de détection du déplacement des cadres de découplage sont situés à proximité l'une de l'autre.

### BRÈVE DESCRIPTION DES DESSINS

La présente invention sera mieux comprise sur la base de la description qui va suivre et des dessins en annexe sur lesquels:
La figure 1 est une vue de dessus représentée schématiquement d'un exemple d'un dispositif de couplage.
La figure 2 est une vue de détail du dispositif de la figure 1.
La figure 3 est une représentation schématique du dispositif de couplage de la figure 1 mis en mouvement selon un mouvement autorisé.
La figure 4A est une vue de dessus d'un gyromètre comportant deux dispositifs de coupage de la figure 1.
La figure 4B est une vue de dessus de moyens d'excitation des cadres de couplage, pouvant être mis en œuvre dans le gyromètre de la figure 4A.
La figure 4C est une vue de dessus de moyens de détection du déplacement des masses pouvant être mis en œuvre dans le gyromètre de la figure 4A.
La figure 5 est une représentation graphique des fonctions de transferts des cadres de découplage en phase non couplés, en anti-phase, en phase couplés par les dispositifs de couplage.
La figure 6 est une vue de dessus partielle d'un autre exemple d'un gyromètre représentant un dispositif de couplage et la mesure de déplacement, dans lequel le dispositif de couplage participe au mesure du déplacement des masses inertielles.

### EXPOSÉ DÉTAILLÉ DE MODES DE RÉALISATION PARTICULIERS

Dans la présente demande on entend par « lame » un élément s'étendant selon une direction principale longitudinal, présentant une forte raideur en compression pour transmettre le mouvement dans la direction principale de la lame, et une faible raideur en flexion pour autoriser les mouvements orthogonaux dus à la ou aux rotations à chaque extrémité. On entend par « un élément présentant une forte raideur en compression dans une direction ou une forte rigidité dans une direction», un élément peu ou pas déformable dans cette direction sous l'effet de contraintes d'intensités courantes dans les MEMS.

Dans la description qui va suivre, le dispositif de couplage est décrit plus particulièrement dans une mise en œuvre dans un gyromètre. Il sera compris que celui-ci peut être mis en œuvre dans un autre système requérant un tel couplage. Par exemple le dispositif de couplage peut être mis en œuvre dans un capteur pour le symétriser et ainsi le rendre insensible à l'accélération. Par exemple, la gravité tend à déplacer les éléments sensibles du capteur dans un même sens, et le dispositif de couplage n'autorise que le déplacement différentiel. Ceci s'applique au capteur magnétique.

Le dispositif de couplage selon l'invention peut également être mis en œuvre pour coupler deux capteurs. Par exemple, si ceux-ci émettent les mêmes signaux ils s'annulent, sinon la différence entre les signaux est détectée. Ceci s'applique par exemple à un capteur de gradient magnétique.

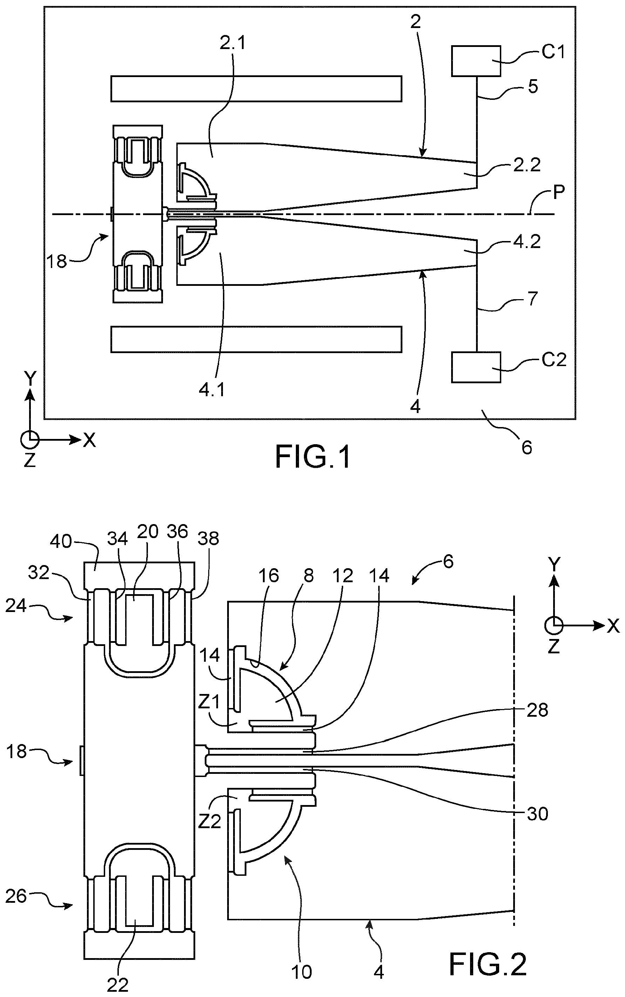

Sur la figure 1, on peut voir représenté schématiquement un exemple d'un dispositif de couplage entre deux éléments C1, C2 mobiles en translation selon une direction Y, typiquement il s'agit de cadres de découplage mis en œuvre dans un gyromètre.

Le dispositif de couplage s'étend dans un plan XY et la direction normale à ce plan est la direction Z désignée direction hors-plan.

Le plan XY est considéré comme le plan du dispositif de couplage, c'est le plan dans lequel les différents éléments du dispositif de couplage et des éléments couplés se déplacent en translation et/ou en rotation.

Le dispositif de couplage DC présente un plan de symétrie P normal au plan XY.

Le dispositif de couplage comporte deux bras 2, 4 disposés de part et d'autre du plan P, chaque bras 2, 4 est articulé en rotation sur un support 6 par une première extrémité longitudinale 2.1, 4.1 autour d'une direction hors-plan Z1, Z2 respectivement. Chaque bras 2, 4 est destiné à être relié à un élément C1, C2 par sa deuxième extrémité longitudinale 2.2, 4.2.

Les bras 2, 4 sont tels qu'ils ne se déforment pas ou peu en flexion sous les niveaux d'effort appliqués classiquement dans les systèmes MEMS. Ils présentent une grande rigidité transversale. Dans l'exemple représenté, les bras présentent une grande dimension transversale dans la direction Y assurant la rigidité. De préférence les bras 2, 4 présentent une forme effilée vers leur deuxième extrémité, permettant de réduire l'inertie, de laisser la place aux débattements entre les bras pour éviter les collisions, et pour réduire l'amortissement visqueux ou squeeze film damping en terminologie anglo-saxonne entre les bras 2, 4.

Chaque deuxième extrémité longitudinale 2.2, 4.2 est reliée à un élément C1, C2 par une lame 5, 7 s'étendant selon l'axe Y et offrant une grande rigidité selon cet axe pour transmettre son déplacement. Les lames 5, 7 offrent une faible raideur en flexion selon X permettant de faire coexister le déplacement en translation des éléments C1, C2 et le déplacement en rotation des bras 2, 4.

Le dispositif comporte pour chaque bras une articulation en rotation ou liaison pivot 8, 10 entre la première extrémité longitudinale 2.1, 4.1 et le support 6.

Les deux articulations sont identiques ou similaires, seule l'articulation 8 sera décrite en détail.

L'articulation en rotation 8 comporte un plot d'ancrage 12 au support 6 et deux lames 14 reliées entre le plot d'ancrage 12 et le bras 2. Les poutres sont orientées l'une par rapport à l'autre selon un angle de 90°. Dans cet exemple, le plot d'ancrage a sensiblement la forme d'un quart de disque et les lames 14 s'étendent du sommet du plot d'ancrage 12 parallèlement aux bords de celui-ci pour se relier au levier. Dans cet exemple, le levier comporte une fenêtre 16 de forme correspondante à la forme extérieure du plot d'ancrage dans laquelle est logé le plot d'ancrage. Avantageusement le levier les poutres et le plot d'ancrage sont réalisés d'un seul tenant par gravure dans une ou plusieurs couches. Cette réalisation présente un haut niveau d'intégration et un encombrement réduit pour l'ensemble bras et articulation pivot. D'autres réalisations des liaisons pivots sont envisageables. Dans cet exemple, les lames 14 sont perpendiculaires. En variante, les lames 14 ne sont pas perpendiculaires. En variante encore, l'articulation 8 comporte deux lames sécantes connectées au bras 2 au niveau de leur point d'intersection, et chaque lame est ancrée au support par un plot d'ancrage.

Chaque bras peut donc pivoter autour de son axe Z1, Z2 sensiblement placé au croisement des deux lames 14.

Le dispositif de couplage comporte également un élément de couplage 18 couplant les deux bras 2, 4. L'élément de couplage 18 sera désigné dans la suite de la description par « chariot ».

Le chariot 18 est suspendu au support 6 par deux plots d'ancrage 20, 22 disposés de part et d'autre du chariot dans la direction Y et par des premiers et deuxièmes moyens de suspension 24, 26 entre le chariot et les plots d'ancrage. Les moyens de suspension autorisent un déplacement en translation de l'élément mobile le long d'une direction X dans le plan et orthogonal à la direction Y, et limitant très fortement, voire empêchant le déplacement selon la direction Y et donc la rotation de l'élément de couplage autour de la direction hors-plan.

Un exemple de réalisation avantageux des premiers et deuxièmes moyens de suspension 24, 26 sera décrit en détail ci-dessous.

Les deux bras 2, 4 sont reliés mécaniquement au chariot 18 par des moyens 28, 30 offrant une grande rigidité dans la direction X et assurant un couplage fort dans la direction X. Dans cet exemple les moyens 28, 30 comportent chacun une lame s'étendant selon la direction X. La forte raideur en compression selon X des poutres permet de transmettre le déplacement aux bras 2, 4. Les lames 28, 30 présente une faible raideur en flexion dans la direction Y, ce qui permet de faire coexister le déplacement en translation du chariot 18 avec le déplacement en rotation de bras 2,4. De manière préféré, le centre de chaque lame 28, 30 est aligné avec les points d'intersection des axes Z1, Z2 et du plan XY, ainsi la déformation des lames 28, 30 se rapproche d'une flexion pure, opposant ainsi une raideur très réduite dans la direction Y.

Les premiers et deuxièmes moyens de suspension 24, 26 sont tels qu'ils assurent le guidage en translation du chariot 18 le long de la direction X. Les premiers et deuxièmes moyens de suspension 24, 26 sont similaires, seuls les premiers moyens de suspension 24 seront décrits en détail.

Les premiers moyens de suspension 24 comportent deux paires de poutres 32, 34 et 36, 38 et un élément de liaison 40. Les poutres sont parallèles entre elles et à la direction Y. Une paire de poutres 32, 34 est disposée d'un côté du plot d'ancrage 20 et l'autre paire de poutres est disposée de l'autre côté du plot d'ancrage 20 en considérant la direction X.

L'élément de liaison 40 s'étend le long de la direction X.

Les poutres 32, 34 et 36, 38 comportent une extrémité longitudinale fixée à l'élément de liaison 40. La seconde extrémité des poutres 34 et 36 est fixée au plot d'ancrage 20. La seconde extrémité longitudinale des poutres 32 et 38 est fixée au chariot 18.

L'élément de liaison 40 est suffisamment rigide dans la direction Y pour que ses déformations soient négligeables sous les contraintes communément appliquées dans les systèmes MEMS. Le couplage des paires de poutres 32, 34, et 36, 38 par l'élément de liaison 40 assure que la raideur dans la direction Y n'est pas réduite.

Les deux poutres 32, 34 et 36, 38 de chaque paire reliées par l'élément de liaison forment un ressort à deux repliements améliorant la linéarité des moyens de guidage. En effet, les poutres de chaque paire présentant des comportements mécaniques proches, lors du déplacement du chariot dans la direction X, les amplitudes des déformations de chaque poutre selon Y, qui sont non linéaires sont proches, les déformations se compensent au moins en partie. Le comportement non-linéaire de l'articulation est alors fortement réduit. D'autre part, la liaison entre les paires 32 et 34 étant partagée par la paire 36 et 38, la perte de raideur dans la direction Y qui pourrait être induite par l'utilisation d'un repliement est annulée. En variante, les premiers et deuxièmes moyens de suspension comportent chacun deux poutres, chacune étant connectée à un sommet du chariot et à un plot d'ancrage, le plot d'ancrage pouvant être commun ou non.

Ainsi le chariot 18 est suspendu par quatre ressorts aux éléments mobiles 40, qui guident celui-ci dans la direction X, limitent fortement son déplacement dans la direction Y et limitent également la rotation de l'élément de couplage autour de la direction hors-plan Z.

Dans l'exemple représenté, les premiers et deuxièmes moyens de suspension ont leur propre plot d'ancrage. En variante, un seul plot d'ancrage est mis en œuvre pour les premiers et deuxièmes moyens de suspension.

Le fonctionnement du dispositif de couplage va maintenant être décrit.

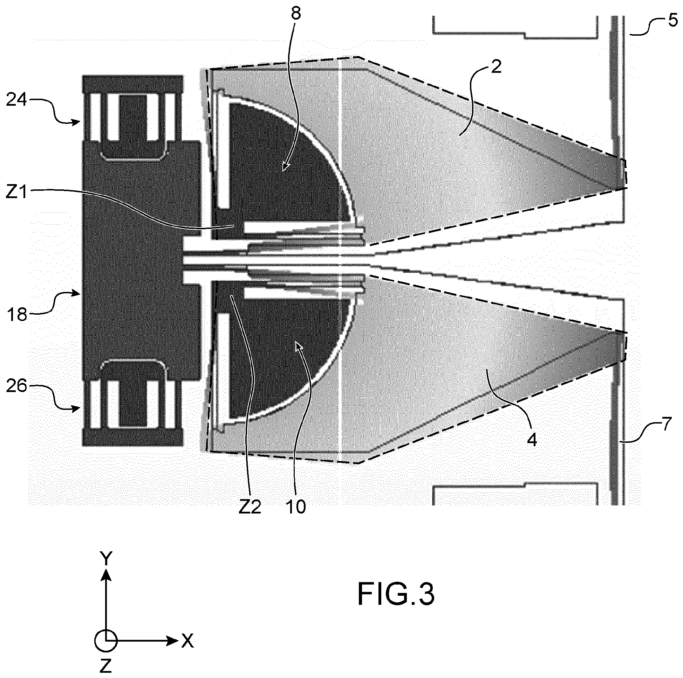

Lorsque les deux bras 2, 4 pivotent (représentés en trait interrompu) autour des axes Z1, Z2 respectivement dans des sens opposés, l'un tournant en sens horaire et l'autre tournant en sens antihoraire, i.e. en opposition de phase (figure 3), les poutres 28, 30 rigides dans la direction X, exercent deux efforts dans le même sens sur le chariot 18 dans la direction X. Le chariot est autorisé à se déplacer dans la direction X par les moyens de suspension 24, 26. Le chariot 18 se déplace vers la gauche dans la représentation de la figure 1 lorsque les bras 2, 4 se rapprochent l'un de l'autre, et se déplace vers la droite lorsque les bras 2, 4 s'écartent l'un de l'autre. Les mouvements en opposition de phase des bras 2, 4 sont donc autorisés et donc ceux des éléments C1, C2 auxquels ils sont reliés.

Lorsque les bras 2, 4 pivotent en phase autour des axes Z1, Z2, i.e. soit dans le sens horaire, soit dans le sens antihoraire, les poutres 28, 30 exercent deux efforts opposés sur le chariot 18, qui tend à pivoter autour de la direction hors-plan Z. Or, les moyens de suspension 24, 26 opposent une forte raideur à une telle rotation. Il en résulte que les mouvements de rotation en phase des bras sont fortement limités.

Ainsi les cadres de découplage solidarisés aux leviers voient les mouvements de translation en opposition de phase favorisés et ceux en phase fortement limités.

Il est à noter que le dispositif de couplage a un effet démultiplicateur entre l'amplitude AY de déplacement des extrémités des leviers 2.2, 4.2 le long de la direction Y, et l'amplitude de déplacement AX de l'élément de couplage le long de la direction X, cette dernière est sensiblement réduite par rapport à l'amplitude AY. En effet, les bras 2, 4 forment des leviers interappui.

La réduction de l'amplitude de déplacement réduit les non linéarités et les contraintes dans les moyens de suspension du chariot. En effet AY peut atteindre 5 µm à 10 µm dans le cas d'un gyromètre.

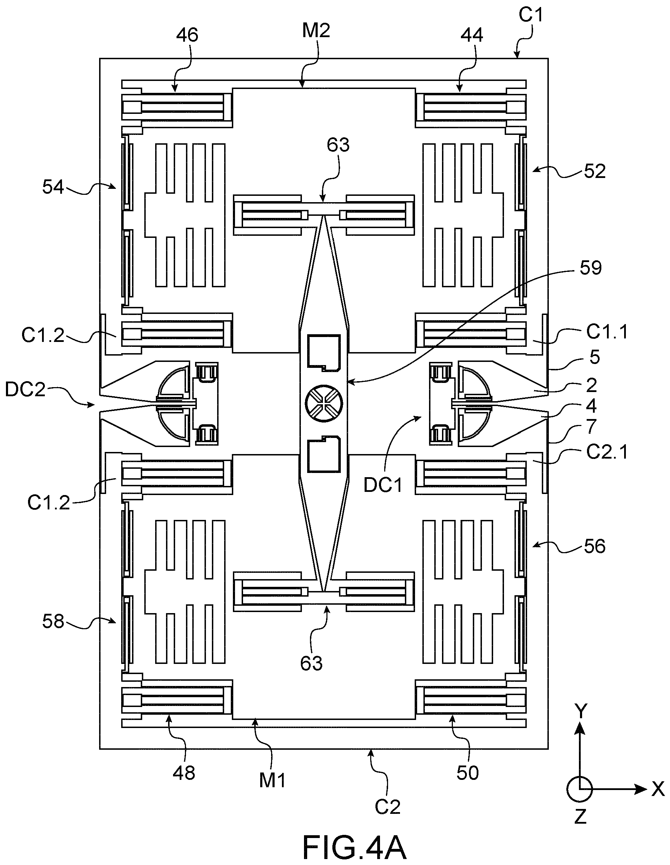

Sur la figure 4A, on peut voir une vue de dessus d'un exemple de gyromètre un axe, détectant la rotation autour de Z, mettant en œuvre deux dispositifs de couplage DC.

Le gyromètre comporte un support 42, deux cadres de découplage C1, C2 suspendus sur le support, chacun par des moyens de suspension 44, 46 et 48, 50.

Les moyens de suspension sont avantageusement du même type que les moyens de suspension 24, 28. Ils présentent un comportement non linéaire réduit et assurent le guidage en translation des cadres dans la direction Y. En variante, les moyens de suspension sont formés par d'autres types de ressort, par exemple de type en serpentin.

Chaque cadre a la forme d'un U, les deux cadres étant disposés l'un par rapport à l'autre de sorte que les extrémités libres C1.1, C1.2 et C2.1, C2.2 des branches soient alignées deux à deux. Les extrémités libres alignées sont chacune reliées à une extrémité 2.2, 4.2 d'un bras 2, 4 d'un dispositif de couplage.

Les extrémités libres C1.1, C1.2 et C2.1, C2.2 des cadres et les extrémités 2.2, 4.2 des bras 2, 4 sont reliées par des éléments rigides 5, 7 dans la direction Y de déplacement des cadres, par exemple des poutres s'étendant dans la direction Y et offrant un fort couplage dans cette direction, tels que celles décrites en relation avec la figure 1.

Ainsi les deux cadres de découplage sont reliés mécaniquement par les deux dispositifs de couplage DC1, DC2 et leurs déplacements relatifs sont maîtrisés par les dispositifs de couplage DC1, DC2.

Le gyroscope comporte également deux masses M1, M2, chacune suspendue dans un cadre de découplage C1, C2 par des moyens de suspension 52, 54, 56, 58. Avantageusement les moyens de suspension sont du même type que les moyens de suspension 24, 28. Ils présentent un comportement non linéaire réduit et assurent le guidage en translation des masses dans la direction X. Néanmoins ils comportent deux barres au lieu de quatre, ils présentent alors une rigidité moindre. En variante, les moyens de suspension sont formés par d'autres types de ressort, par exemple de type en serpentin.

Les deux masses M1, M2 sont reliées par une poutre centrale 59. La poutre centrale 59 est maintenue en rotation par une charnière 61 formée de quatre poutres orthogonales et ancrées au centre du gyroscope. La poutre centrale 59 est entrainée par les masses M1, M2, lorsque celles-ci se déplacent de manière opposée dans la direction X. Chacune des extrémités longitudinales de la poutre 59 est reliée à une masse M1, M2 par des ressorts 63 souples et linéaires dans la direction Y, permettant d'absorber le mouvement des cadres de découplage, et raides dans la direction X, transmettant le mouvement des masses M1, M2 à la poutre centrale 59 et aux moyens de détection décrits ci-dessous. La poutre centrale 59 assure également un couplage des masses M1, M2 qui ne peuvent bouger que symétriquement par rapport l'axe de rotation de la charnière 61.

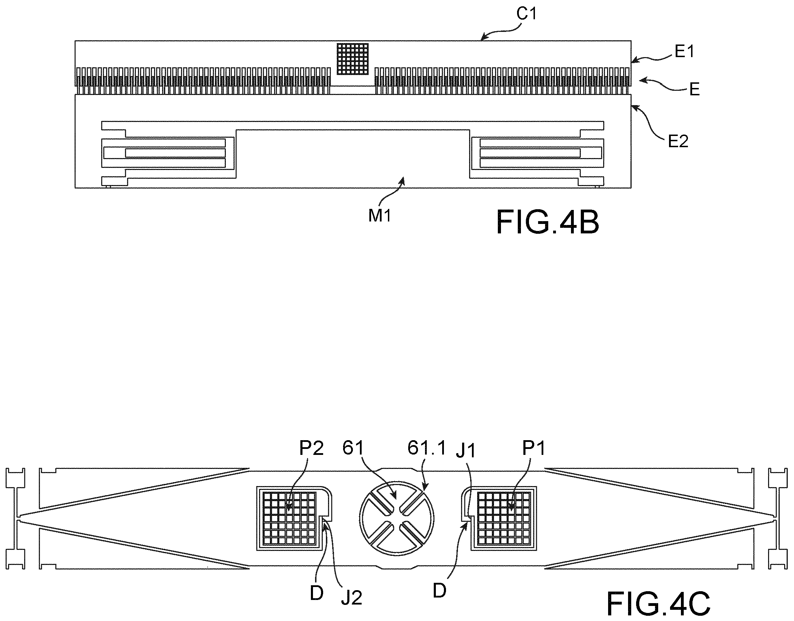

Le gyroscope comporte également des moyens d'excitation E configurés pour mettre en vibration les cadres de découplage et les masses dans une direction X ou Y. Sur la figure 4B, on peut voir un exemple de ces moyens d'excitation E. Ils comportent des peignes interdigités E1, E2 formant des électrodes, le peigne E1 formant une électrode fixe et le peigne E2 formant une électrode mobile. Chaque cadre C1, C2 comporte des moyens d'excitation.

Le gyroscope comporte également des moyens de détection D du déplacement des masses et avantageusement des moyens de détection du déplacement des cadres dans la direction d'excitation.

Sur la figure 4C, on peut voir une vue agrandie de la poutre 59 montrant un exemple de moyens de détection D du déplacement des masses. Ils comportent deux jauges de contrainte J1, J2 chacune suspendues entre la poutre centrale 59 et un plot d'ancrage et de connexion électrique P1, P2. Les jauges J1, J2 sont disposées de part et d'autre de l'axe de rotation et de sorte à être étirées ou comprimées par le déplacement en rotation de la poutre centrale 59 due aux déplacements des masses dans la direction Y. Les jauges sont avantageusement montées pour permettre une mesure différentielle

En variante, les moyens de détection sont de type capacitif.

Un exemple de fonctionnement du gyroscope va maintenant être décrit.

On souhaite mesurer la vitesse de rotation selon l'axe hors-plan Z. Les cadres sont excités dans la direction X, ceux-ci se déplacent avec les masses.

Du fait des dispositifs de couplage reliant les cadres, les deux cadres C1, C2 se déplacent principalement en opposition de phase, les déplacements en phase étant fortement empêchés par les dispositifs de couplage DC1, DC2.

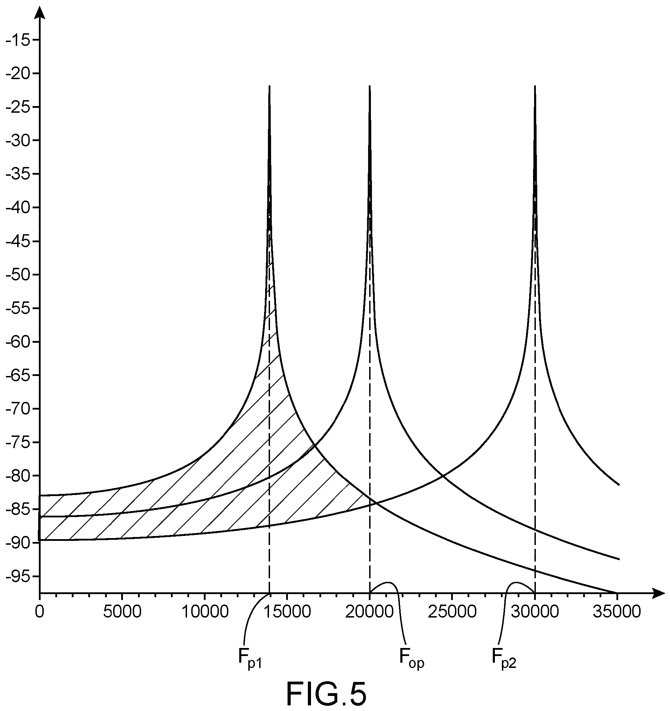

Il en résulte que le mode en phase est rejeté à une fréquence supérieure à celle du mode en opposition de phase comme cela est représenté sur la figure 5, qui représentent les fonctions de transfert des cadres de découplage en phase non couplés, en antiphase, en phase couplés par les dispositifs de couplage, i.e. le rapport déplacement sur force d'excitation en fonction de sa fréquence.

Fp1 est la fréquence du mode en phase d'un gyromètre de l'état de la technique qui est de l'ordre de 14 kHz, fp2 est la fréquence du mode en phase du gyromètre avec les dispositifs de couplage DC, qui est de l'ordre de 30 kHz et fop est la fréquence du mode en opposition de phase du gyromètre qui est de l'ordre de 20 kHz, cette fréquence étant dans cet exemple gardée constante lors de la mise en œuvre des dispositifs de couplage.

Le mode d'excitation en opposition de phase survient en premier à 20kHz. Le mode en phase étant rejeté à plus haute fréquence, il est moins sensible aux perturbations, comme les vibrations entre 0 et 20kHz.

Sous l'effet des forces de Coriolis liées à la rotation autour de l'axe Z, les masses se déplacent dans la direction X. Le déplacement des masses est mesuré par les moyens de détection. Du fait de la symétrie du gyroscope, on forme une structure différentielle qui permet de s'affranchir d'une accélération ou de la gravité.

Grâce aux dispositifs de couplage on favorise la survenance d'un mode d'excitation en opposition de phase.

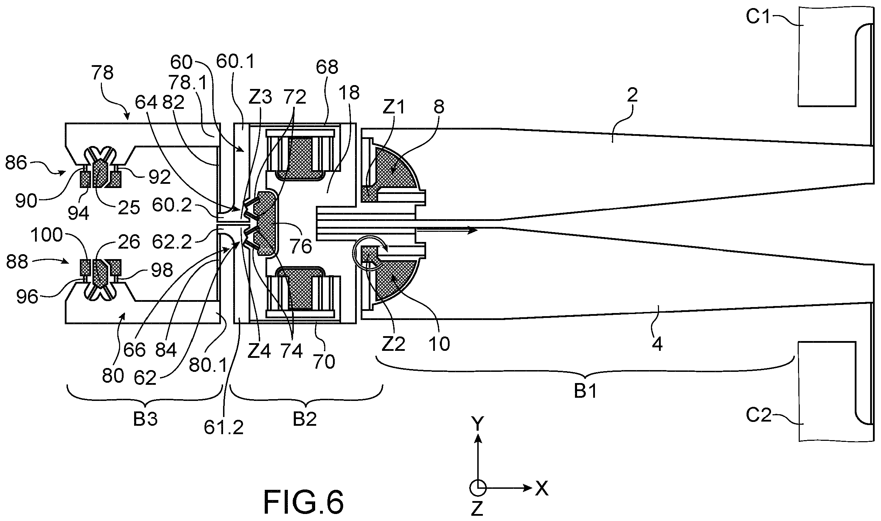

Sur la figure 6, on peut voir un exemple de réalisation particulièrement adapté à la mise en œuvre de moyens de détection du déplacement des cadres à jauge de contrainte, par exemple à jauge piézorésistive.

Le déplacement des cadres est de l'ordre de 10 µm, mais les jauges de contraintes ne sont pas aptes à supporter un tel déplacement. Les jauges sont aptes à mesurer généralement un déplacement de l'ordre de 10 nm Pour cela, des moyens de détection de type capacitif sont généralement mis en œuvre, car ceux-ci peuvent mesurer directement de grands déplacements. Par exemple, les moyens de détection capacitif comportent un premier peigne formé dans une face de l'élément de couplage opposée à celle reliée aux bras 2, 4 et un deuxième peigne porté par le support et interdigité avec le premier peigne.

Il peut être avantageux néanmoins de mesurer le déplacement des cadres au moyen de jauges piézorésistives. En effet les jauges piézorésistives présentent un encombrement sensiblement réduit par rapport à celui des peignes interdigités. En outre, les moyens de détection du déplacement des masses mettent généralement en œuvre des jauges piézorésistive, il est avantageux d'utiliser des jauges à la fois pour mesurer le déplacement des cadres et le déplacement des masses, ce qui permet de s'affranchir de plusieurs défauts comme le bruit sur la tension de la polarisation, ou la dérive en température à laquelle sont sujettes les jauges. En effet les jauges présentant les mêmes défauts, ceux-ci s'annulent lorsque le rapport de la mesure du déplacement des masses sur la mesure du déplacement des cadres est calculé.

La figure 6 montre un exemple de réalisation de moyens permettant de démultiplier le déplacement des cadres mesuré par les jauges.

Les moyens de démultiplication comportent plusieurs bras de levier en série permettant de réduire suffisamment le déplacement à mesurer par les jauges.

Dans l'exemple représenté, trois bras de levier B1, B2, B3 sont mis en œuvre.

Avantageusement, chaque bras de levier présente une symétrie par rapport au plan P du fait de la détection du déplacement des deux cadres C1, C2.

Le premier bras de levier B1 est formé par les bras 2, 4 du dispositif de couplage.

Le deuxième bras de levier B2 comporte deux bras 60, 62 articulés en rotation sur le support par des articulations pivots 64, 66 d'axe Z3, Z4 respectivement. Dans l'exemple représenté, les deux bras sont alignés l'un avec l'autre et s'étendent dans la direction Y.

Les deux bras 60, 62 forment des leviers interappui. Chaque bras 60, 62 comporte une première extrémité longitudinale 60.1, 62.1 reliée mécaniquement au chariot 18 par un élément 68, 70 offrant une rigidité importante dans la direction X et une certaine souplesse dans la direction Y pour accorder les mouvements du bras de levier et du chariot. Les éléments 68, 70 sont par exemple des poutres s'étendant le long de la direction X. Dans cet exemple, les poutres 68, 70 s'étendent de part et d'autre du chariot 18 et se raccordent au chariot du côté des bras 2, 4. Chaque bras 60, 62 comporte une deuxième extrémité longitudinale 60.2, 62.2 reliée mécaniquement au troisième bras de levier, l'articulation pivot de chaque bras 60, 62 étant entre leurs deux extrémités.

Cette configuration permet d'avoir des bras 60, 62 relativement long dans la direction Y, qui offrent un bras de levier important, et également de réduire l'encombrement le long de la direction X, les poutres 68, 70 s'étendant le long du chariot. En variante, les bras 60, 62 se raccordent au chariot sur sa face située à l'opposé des bras 2, 4.

Dans l'exemple représenté, les articulations pivots 64, 66 comportent chacune deux poutres 72, 74 aptes à se déformer en flexion dans le plan XY, les deux poutres étant raccordées à un plot d'ancrage 76. Dans l'exemple représenté, les deux paires de poutres 72, 74 sont raccordées au même plot d'ancrage 76. En variante des plots d'ancrage distincts pour les deux paires de poutres sont mis en œuvre.

Le troisième bras de levier B3 comporte deux bras 78, 80 s'étendant dans la direction X et reliés mécaniquement aux deuxièmes extrémités longitudinales 60.2, 62.2 des bras 60, 62 par des éléments 82, 84 offrant une rigidité importante dans la direction Y, et une grande souplesse dans la direction X pour accorder les mouvements des deux bras de levier. Les éléments 82, 84 sont par exemple des poutres s'étendant le long de la direction Y. Dans cet exemple, les poutres 82, 84 s'étendent de part et d'autre de l'élément mobile et se raccordent à l'élément mobile du côté des bras 2, 4.

Les bras 78, 80 du bras de levier B3 sont articulés en rotation sur le support par des articulations pivots 86, 88 d'axe Z5, Z6 respectivement. Les articulations pivots 86, 88 sont similaires aux articulations pivots 64, 66.

Deux jauges de contraintes 90, 92 sont suspendues entre le bras 78 et des plots d'ancrage 94 de part et d'autre de l'articulation pivot 86 et permettent une mesure différentielle. Ainsi lorsque le bras 78 pivote, l'une des jauges est comprimée tandis que l'autre est étirée.

Deux jauges de contraintes 96, 98 sont suspendues entre le bras 80 et le plot d'ancrage 100 de l'articulation pivot 88 de part et d'autre de l'articulation et permettant une mesure différentielle. Ainsi lorsque le bras 80 pivote, l'une des jauges est comprimée tandis que l'autre est étirée.

Le fonctionnement d'un gyromètre comportant de tels moyens de démultiplication va maintenant être décrit.

Lorsque les cadres sont excités en opposition de phase, ils se déplacent en translation le long de la direction Y, d'un certain déplacement. Les bras 2, 4 pivotent alors en opposition de phase, provoquant un déplacement de l'élément de couplage le long de la direction X. Du fait de l'effet bras de levier résultant des bras 2, 4, le déplacement de l'élément mobile 18 le long de la direction X est réduit du gain du bras de levier par rapport à ceux des cadres C1, C2.

Le déplacement de l'élément mobile 18 provoque le pivotement des bras 60, 62 du deuxième bras de levier. Le déplacement axial des deuxièmes extrémités 60.1, 62.1 des bras 60, 62 le long de la direction X est réduit du gain du bras de levier formé par les bras 60, 62, par rapport au déplacement de l'extrémité 60.2, 62.2 dans la direction Y, le déplacement de l'extrémité 60.1 étant égal ou très proche du déplacement du chariot 18.

Le pivotement des bras 60, 62 provoque le pivotement des bras 78, 80 autour des articulations pivots 86, 88. Les jauges sont alors déformées. Le déplacement des jauges est réduit du gain du bras de levier des bras 78, 80 par rapport au déplacement des extrémités 78.1, 80.1 des bras 78, 80 très proche du déplacement des extrémités 60.2, 62.2 des bras 60, 62.

Ainsi le rapport entre le déplacement des cadres le long de la direction Y et le déplacement appliqué aux jauges est égal au produit des gains de bras de levier des trois bras de levier B1, B2 et B3.

A titre d'exemple, en considérant que le gain du premier bras de levier B1 est de 30 et le gain de chacun des bras de levier est de 6, le gain total est de 1080. Ainsi, pour un déplacement des cadres de l'ordre de 10 µm, les jauges voient un déplacement de l'ordre de 9 nm, inférieure au 10 nm qu'elles peuvent mesurer.

Ainsi il est possible d'utiliser des jauges pour mesurer le déplacement des cadres.

Il sera compris que le nombre de bras de levier en série n'est pas limitatif, deux ou plus de trois bras de levier peuvent être mis en œuvre, qui offrent chacun des gains différents de ceux énoncés ci-dessus. Les gains peuvent être ajustés en modifiant les dimensions des bras.

De manière très avantageuse, les jauges de mesure du déplacement des cadres sont disposées à proximité des jauges de mesure du déplacement des masses, i.e. à une distance de l'ordre de quelques 10 µm, ainsi elles voient les mêmes températures. En outre, lors de la fabrication avantageusement par des procédés microélectroniques elles sont réalisées dans les mêmes conditions lors des étapes de lithographie et gravure.

Dans l'exemple représenté, une paire de jauges est mise œuvre sur chaque bras 78, 80 assurant une symétrie mécanique favorable au fonctionnement de l'ensemble. En outre, chaque paire permet une mesure différentielle.

On peut envisager de ne pas récupérer le signal sur l'une des paires de jauges, celle-ci servant uniquement à l'obtention d'une symétrie mécanique.

En variante, une seule jauge sur chaque bras peut être utilisée au lieu de deux.

Enfin un système ne comportant qu'une paire de jauges ou une jauge sur un des bras ne sort pas du cadre de la présente invention.

Un système ne comportant qu'un bras 60 et qu'un bras 78, ne sort pas du cadre de la présente invention.

La mise en œuvre de plusieurs bras de levier en série permet de bien maîtriser le rapport de démultiplication, en effet le gain des bras de levier est géométrique. Le gain de chaque bras de levier varie très peu en fonction des imperfections de gravure. La raideur apparente peut varier mais pas le rapport de déplacement entre l'entrée du bras et la sortie du bras.

Le même système de démultiplication peut être mis en œuvre pour l'autre dispositif de couplage.

En variante, afin de réduire le déplacement vu par les jauges un dispositif tel que décrit dans le brevet EP 3 136 052 peut être mis en œuvre. Néanmoins le rapport de démultiplication est moins bien maîtrisé.

Un gyromètre dans lequel des bras de levier en série sont mis en œuvre entre les masses et les jauges de mesure du déplacement des masses ne sort pas du cadre de la présente invention.

Les éléments dont les mouvements sont symétrisés par le dispositif de couplage peuvent être mobiles en rotation autour d'un axe normal au plan XY. Le dispositif de couplage impose alors aux deux éléments de pivoter dans des sens opposés.

Le dispositif de couplage selon l'invention et le gyromètre comportant de tels dispositifs de couplage peuvent être très avantageusement réalisés par des procédés mis en œuvre dans le domaine de la microélectronique.

## Revendications

1. Dispositif de couplage mécanique destiné à coupler deux éléments mobiles (C1, C2) en mouvement dans un premier plan (XY) de sorte à leur imposer des déplacements symétriques par rapport à un deuxième plan (P) normal au premier plan, ledit dispositif de couplage comportant deux bras (2, 4) articulés chacun sur un support (6) par une liaison pivot (8, 10) autour d'une première direction hors-plan (Z) normale au premier plan (XY), la liaison pivot (8, 10) comportant un plot d'ancrage (12) au support (6) et deux lames (14) reliées entre le plot d'ancrage (12) et le bras (2, 4), l'un des bras (2) étant destiné à être relié à un élément mobile (C1) et l'autre bras (4) étant destiné à être relié à l'autre élément mobile (C2) par des premiers éléments (5, 7) présentant une forte rigidité dans une deuxième direction (Y) du premier plan, un élément de couplage (18) auquel sont reliés les deux bras (2, 4) par des deuxièmes éléments (28, 30) présentant une forte rigidité dans une troisième direction (X) du premier plan distincte de la deuxième direction (Y), ledit élément de couplage (18) étant configuré pour se déplacer en translation le long de la troisième direction (X), des moyens de suspension dudit élément de couplage (18) au support (6), lesdits moyens de suspension étant configurés pour guider l'élément de couplage en translation le long de la troisième direction (X) et limiter son déplacement en rotation autour de la première direction, et dans lequel les premiers éléments (5, 7) comportent des lames rigides en compression dans la deuxième direction (Y) et souples en flexion dans la troisième direction (X), et dans lequel les deuxièmes éléments (28, 30) comportent des lames rigides en compression dans la troisième direction (X) et souples en flexion dans la deuxième direction (Y).

2. Dispositif de couplage mécanique selon la revendication 1, dans lequel en considérant la troisième direction (X) l'élément de couplage comporte deux bords latéraux, et dans lequel les moyens de suspension comportent quatre moyens, deux moyens de part et d'autre de l'élément de couplage (18) par rapport à la troisième direction (X), chaque moyen étant disposé à une extrémité d'un bord latéral en considérant la troisième direction (X).

3. Dispositif de couplage selon la revendication 2, dans lequel chaque moyen comporte une première poutre et une deuxième poutre parallèles, chaque première et deuxième poutre étant apte à se déformer en flexion dans la troisième direction (X) et étant rigide en compression dans la deuxième direction (Y), et dans lequel la première poutre comporte une première extrémité longitudinale fixée à l'élément de couplage (18) et une deuxième extrémité longitudinale fixée à un élément de liaison (40) s'étendant dans la troisième direction (X), la deuxième poutre comporte une première extrémité longitudinale fixée à un plot d'ancrage et une deuxième extrémité longitudinale fixée audit élément de liaison (40), et dans lequel l'élément de liaison est commun aux deux moyens reliés au même bord latéral de l'élément de couplage (18).

4. Dispositif de couplage selon l'une des revendications 1 à 3, dans lequel les bras (2, 4) sont peu ou pas déformables en flexion dans la deuxième direction (Y).

5. Gyromètre comportant un support (6) et au moins un dispositif de couplage (DC1, DC2) selon l'une des revendications 1à 4, le gyromètre comprenant deux cadres de découplage (C1, C2) suspendus au support (6) de sorte à être mobile en translation dans la deuxième direction (Y), une masse (M1, M2) suspendue à chaque cadre de découplage (C1, C2), de sorte à être mobile en translation dans la troisième direction (X), ledit dispositif de couplage (DC1, DC2) reliant mécaniquement les deux cadres de découplage (C1, C2) de sorte à leur imposer un déplacement en opposition de phase dans la deuxième direction (Y), le gyromètre comprenant en outre des moyens d'excitation des cadres de découplage (C1, C2) dans la deuxième direction (Y) et des moyens de détection du déplacement des masses (M1, M2) dans la troisième direction (X).

6. Gyromètre selon la revendication précédente, comportant deux dispositifs de couplage (DC1, DC2) et dans lequel chaque cadre de découplage (DC1, DC2) a la forme générale d'un U, les deux cadres de découplage étant disposés de sorte que les extrémités libres des branches du U soient alignées, et dans lequel chaque dispositif de couplage (DC1, DC2) relie deux extrémités libres alignées des deux cadres de découplage (C1, C2).

7. Gyromètre selon la revendication précédente, dans lequel chaque bras (2, 4) d'un des dispositifs de couplage (DC1, DC2) est relié à une extrémité libre d'un des cadres de découplage (C1, C2) par une poutre s'étendant dans la deuxième direction (Y).

8. Gyromètre selon l'une des revendications 5 à 7, comportant des moyens de détection du déplacement des cadres de découplage dans la deuxième direction (Y), et dans lequel lesdits moyens de détection comportent au moins une jauge de contrainte sensible au déplacement d'un des éléments mobiles.

9. Gyromètre selon la revendication précédente, comportant des moyens de démultiplication du déplacement de l'élément mobile.

10. Gyromètre selon la revendication précédente, dans lequel les moyens de démultiplication comportent au moins un bras de levier (B2) en série avec les bras (2, 4) d'au moins un dispositif de découplage.

11. Gyromètre selon la revendication précédente, dans lequel le bras de levier (B2) comporte deux bras (60, 62) articulés en rotation sur le support (6) et comportant une extrémité reliée à l'élément de couplage (18), lesdits bras (60, 62) s'étendant dans la deuxième direction (Y) et étant situés à l'opposé des bras (2, 4) du dispositif de couplage par rapport à l'élément de couplage (18).

12. Gyromètre selon la revendication précédente, comportant un moins un autre bras de levier (B3) comportant deux bras (78, 80) articulés en rotation sur le support (6), chacun relié par une extrémité à un bras (60, 62) du bras de levier et relié par une autre extrémité à la jauge de contrainte.

13. Gyromètre selon l'une des revendications 5 à 12 en combinaison avec la revendication 8, dans lequel les moyens de détection du déplacement des masses comportent au moins une jauge de contrainte et dans lequel ladite jauge de contrainte et la au moins une jauge de contrainte des moyens de détection du déplacement des cadres de découplage sont situés à proximité l'une de l'autre.

## Patentansprüche

1. Mechanische Koppelvorrichtung, die zum Koppeln zweier beweglicher Elemente (C1, C2) bestimmt ist, die sich in einer ersten Ebene (XY) bewegen, um ihnen gegenüber einer zweiten Ebene (P), die in der ersten Ebene normal ist, symmetrische Bewegungen aufzuerlegen, wobei die Koppelvorrichtung zwei Arme (2, 4) aufweist, die jeweils über eine Drehverbindung (8, 10) auf einer Stütze (6) um eine erste, in der ersten Ebene (XY) normale außerplanare Richtung (Z) gelenkt sind, wobei die Drehverbindung (8, 10) einen Ankerbolzen (12) an der Stütze (6) aufweist und zwei Blätter (14), die zwischen dem Ankerbolzen (12) und dem Arm (2, 4) verbunden sind, wobei einer der Arme (2) dazu bestimmt ist, mit einem beweglichen Element (C1) verbunden zu werden, und der andere Arm (4) dazu bestimmt ist, mit dem anderen beweglichen Element (C2) durch erste Elemente (5, 7) verbunden zu werden, die eine hohe Steifigkeit in einer zweiten Richtung (Y) der ersten Ebene aufweisen, wobei ein Koppelelement (18), mit dem die beiden Arme (2, 4) durch zweite Elemente (28, 30) verbunden sind, eine hohe Steifigkeit in einer von der zweiten Richtung (Y) verschiedenen dritten Richtung (X) der ersten Ebene aufweist, wobei das Koppelelement (18) so ausgebildet ist, dass es sich in Translation entlang der dritten Richtung (X) bewegt, sowie Mittel zur Aufhängung des Koppelelements (18) an der Stütze (6), wobei die Mittel zur Aufhängung so ausgebildet sind, dass sie das Koppelelement in Translation entlang der dritten Richtung (X) führen und seine Drehbewegung um die erste Richtung begrenzen, und wobei die ersten Elemente (5, 7) in der zweiten Richtung (Y) druckfeste und in der dritten Richtung (X) biegsame Blätter aufweisen, und wobei die zweiten Elemente (28, 30) in der dritten Richtung (X) druckfeste und in der zweiten Richtung (Y) biegsame Blätter sind.

2. Mechanische Koppelvorrichtung nach Anspruch 1, wobei das Koppelelement unter Berücksichtigung der dritten Richtung (X) zwei Seitenkanten aufweist und wobei die Mittel zur Aufhängung vier Mittel aufweisen, d. h. zwei Mittel auf jeder Seite des Koppelelements (18) in Bezug auf die dritte Richtung (X), wobei jedes Mittel an einem Ende einer Seitenkante in Bezug auf die dritte Richtung (X) angeordnet ist.

3. Koppelvorrichtung nach Anspruch 2, wobei jedes Mittel einen ersten Träger und einen zweiten parallelen Träger aufweist, wobei jeder erste und zweite Träger dazu ausgelegt ist, sich in der dritten Richtung (X) zu biegen und in der zweiten Richtung (Y) druckfest zu sein, und wobei der erste Träger ein erstes Längsende, das an dem Koppelelement (18) befestigt ist, und ein zweites Längsende, das an einem sich in der dritten Richtung (X) erstreckenden Verbindungselement (40) befestigt ist, aufweist, der zweite Träger ein erstes Längsende, das an einem Ankerbolzen befestigt ist, und ein zweites Längsende, das an diesem Verbindungselement (40) befestigt ist, aufweist, und wobei das Verbindungselement beiden Mitteln gemeinsam ist, die mit derselben Seitenkante des Koppelelements (18) verbunden sind.

4. Koppelvorrichtung nach einem der Ansprüche 1 bis 3, wobei die Arme (2, 4) in der zweiten Richtung (Y) wenig oder gar nicht biegeverformbar sind.

5. Gyrometer mit einer Stütze (6) und mindestens einer Koppelvorrichtung (DC1, DC2) nach einem der Ansprüche 1 bis 4, wobei das Gyrometer zwei Entkoppelrahmen (C1, C2), die so an der Stütze (6) aufgehängt sind, dass sie in der zweiten Richtung (Y) translatorisch beweglich sind, eine Masse (M1, M2), die an jedem Entkoppelrahmen (C1, C2) aufgehängt ist, so dass sie in der dritten Richtung (X) beweglich ist, umfasst, wobei die Koppelvorrichtung (DC1, DC2) die beiden Entkoppelrahmen (C1, C2) mechanisch verbindet, um ihnen eine gegenläufige Phasenverschiebung in der zweiten Richtung (Y) aufzuerlegen, wobei das Gyrometer weiter Mittel zur Anregung der Entkoppelrahmen (C1, C2) in der zweiten Richtung (Y) und Mittel zur Erkennung der Massenverschiebung (M1, M2) in der dritten Richtung (X) umfasst.

6. Gyrometer nach dem vorhergehenden Anspruch, der zwei Koppelvorrichtungen (DC1, DC2) aufweist und wobei jeder Entkoppelrahmen (DC1, DC2) die allgemeine Form eines U aufweist, wobei die beiden Entkoppelrahmen so angeordnet sind, dass die freien Enden der U-Stränge fluchten, und wobei jede Koppelvorrichtung (DC1, DC2) zwei freie, fluchtende Enden der beiden Entkoppelrahmen (C1, C2) verbindet.

7. Gyrometer nach dem vorhergehenden Anspruch, wobei jeder Arm (2, 4) einer der Koppelvorrichtungen (DC1, DC2) mit einem freien Ende eines der Entkoppelrahmen (C1, C2) durch einen sich in die zweite Richtung (Y) erstreckenden Träger verbunden ist.

8. Gyrometer nach einem der Ansprüche 5 bis 7, mit Mitteln zur Erkennung der Bewegung der Entkoppelrahmen in die zweite Richtung (Y), und wobei die Mittel zur Erkennung mindestens eine Dehnungsmesslehre aufweisen, die empfindlich auf die Bewegung eines der beweglichen Elemente reagiert.

9. Gyrometer nach dem vorhergehenden Anspruch, mit Mitteln zur Übersetzung der Verschiebung des beweglichen Elements.

10. Gyrometer nach dem vorhergehenden Anspruch, wobei die Mittel zur Übersetzung mindestens einen Hebelarm (B2) in Reihe mit den Armen (2, 4) mindestens einer Entkoppelvorrichtung aufweisen.

11. Gyrometer nach dem vorhergehenden Anspruch, wobei der Hebelarm (B2) zwei Arme (60, 62) aufweist, die drehbar an der Stütze (6) gelenkt sind und ein mit dem Koppelelement (18) verbundenes Ende aufweisen, wobei sich die Arme (60, 62) in der zweiten Richtung (Y) erstrecken und gegenüber den Armen (2, 4) der Koppelvorrichtung gegenüber dem Koppelelement (18) liegen.

12. Gyrometer nach dem vorhergehenden Anspruch, der mindestens einen anderen Hebelarm (B3) aufweist, der zwei Arme (78, 80) aufweist, die drehbar an der Stütze (6) gelenkt sind, wobei jeder von einem Ende mit einem Arm (60, 62) des Hebelarms verbunden und von einem anderen Ende mit dem Dehnungsmessstreifen verbunden ist.

13. Gyrometer nach einem der Ansprüche 5 bis 12 in Kombination mit Anspruch 8, wobei die Mittel zur Erkennung der Massenverschiebung mindestens einen Dehnungsmessstreifen aufweisen und wobei der Dehnungsmessstreifen und der mindestens eine Dehnungsmessstreifen der Mittel zur Erkennung der Verschiebung der Entkoppelrahmen nahe beieinander liegen.

## Claims

1. Mechanical coupling device intended to couple two elements (C1, C2) able to move in movement in a first plane (XY), so as to impose thereon symmetrical movements with respect to a second plane (P) normal to the first plane, said coupling device including two arms (2, 4) each articulated on a support (6) by a pivot connection (8, 10) about a first out-of-plane direction (Z) normal to the first plane (XY), the pivot connection (8, 10) comprising a stud (12) for anchoring to the support (6) and two blades (14) linked between the anchoring stud (12) and the arm (2, 4), one of the arms (2) being intended to be connected to one movable element (C1) and the other arm (4) being intended to be connected to the other movable element (C2) by first elements (5, 7) having high rigidity in a second direction (Y) of the first plane, a coupling element (18) to which the two arms (2, 4) are connected by second elements (28, 30) having high rigidity in a third direction (X) of the first plane distinct from the second direction (Y), said coupling element (18) being configured to move in translation along the third direction (X), suspension means of said coupling element (18) to support (6), said suspension means being configured for guiding the coupling element in translation along the third direction (X) and limiting its movement in rotation about the first direction, and wherein the first elements (5, 7) include blades rigid under compression in the second direction (Y) and flexible in bending in the third direction (X), and wherein the second elements (28, 30) include blades rigid under compression in the third direction (X) and flexible in bending in the second direction (Y).

2. Mechanical coupling device according to claim 1, wherein, looking in the third direction (X), the coupling element includes two lateral edges, and wherein the suspension means include four means, two means on either side of the coupling element (18) with respect to the third direction (X), each means being disposed at an end of a lateral edge with regard to the third direction (X).

3. Coupling device according to claim 2, wherein each element includes a first beam and a second beam parallel to each other, each first and second beam being able to deform under bending in the third direction (X) and being rigid under compression in the second direction (Y), and wherein the first beam includes a first longitudinal end attached to the coupling element (18) and a second longitudinal end attached to a connection element (40) extending in the third direction (X), the second beam includes a first longitudinal end attached to an anchoring stud and a second longitudinal end attached to said connection element (40), and wherein the connection element is common to the two means connected to the same lateral edge of the coupling element (18).

4. Coupling device according to any of claim 1 to 3, wherein the arms (2, 4) are not or only slightly deformable under bending in the second direction (Y).

5. Gyrometer including a support (6) and at least one coupling device (DC1, DC2) according to any of claims 1 to 4, the gyrometer comprising two decoupling frames (C1, C2) suspended from the support (6) so as to be able to move in translation in the second direction (Y), a mass (M1, M2) suspended from each decoupling frame (C1, C2), so as to be able to move in translation in the third direction (X), said coupling device (DC1, DC2) mechanically connecting the two decoupling frames (C1, C2) so as to impose thereon a movement in phase opposition in the second direction (Y), the gyrometer comprising further comprising means for exciting the decoupling frames (C1, C2) in the second direction (Y) and means for detecting the movement of the masses (M1, M2) in the third direction (X).

6. Gyrometer according to the preceding claim, including two coupling devices (DC1, DC2), and wherein each decoupling frame (DC1, DC2) is in the general form of a U, the two decoupling frames being disposed so that the free ends of the arms of the U are aligned, and wherein each coupling device (DC1, DC2) connects two aligned free ends of the two decoupling frames (C1, C2).

7. Gyrometer according to the preceding claim, wherein each arm (2, 4) of one of the coupling devices (DC1, DC2) is connected to a free end of one of the decoupling frames (C1, C2) by a beam extending in the second direction (Y).

8. Gyrometer according to any of claims 5 to 7, including means for detecting the movement of the decoupling frames in the second direction (Y), and wherein said detector means includes at least one strain gauge sensitive to the movement of one of the movable elements.

9. Gyrometer according to the preceding claim, comprising means for reducing the movement of the movable element.

10. Gyrometer according to the preceding claim, wherein the reduction means include at least one lever arm (B2) in series with the arms (2, 4) of at least one decoupling device.

11. Gyrometer according to the preceding claim, wherein the lever arm (B2) includes two arms (60, 62) rotationally articulated on the support (6) and comprising an end connected to the coupling element (18), said arms (60, 62) extending in the second direction (Y) and being located opposite the arms (2, 4) of the coupling device with respect to the coupling element (18).

12. Gyrometer according to the preceding claim, including at least one other lever arm (B3) including two arms (78, 80) rotationally articulated on the support (6), each connected by one end to an arm (60, 62) of the lever arm and connected by another end to the strain gauge.

13. Gyrometer according to any of claims 5 to 12 in combination with claim 8, in which the means for detecting the movement of masses comprises at least one strain gauge, and wherein said strain gauge and the at least one strain gauge of the at least one detector of the movement of the decoupling frames are located in proximity to each other.
